# EUROPÄISCHE PATENTSCHRIFT

(11) **EP 1 110 702 B1**
(45) Veröffentlichungstag und Bekanntmachung des Hinweises auf die Patenterteilung: **16.06.2004**
(21) Anmeldenummer: 00710045.6
(22) Anmeldetag: 19.12.2000
(51) Int. Cl.: B29C 65/20

(54) **Schweisskopf für das Heizelementschweissen**
Welding head for hot plate welding
Tête de soudage pour soudage par plaque chauffante

(30) Priorität: 24.12.1999 DE 19962973
(43) Veröffentlichungstag der Anmeldung: 27.06.2001
(73) Patentinhaber: BIELOMATIK LEUZE GmbH + Co., D-72639 Neuffen (DE)
(72) Erfinder: Mönch, Dietmar, 72664 Kohlberg (DE)
(74) Vertreter: Patentanwälte Ruff, Wilhelm, Beier, Dauster & Partner

(56) Entgegenhaltungen:
- WO-A-96/08359
- US-A- 5 006 197
- US-A- 5 614 118
- US-A1- 2001 006 087

## Beschreibung

Die Erfindung betrifft einen Schweißkopf für das Heizelementschweißen, insbesondere von thermoplastischen Kunststoffen.

Es sind Schweißköpfe für das Heizelementschweißen bekannt, die einen Greifer zum Halten des Anschweißteiles aufweisen. Des weiteren ist an dem Schweißkopf ein doppelt wirkender Schweißspiegel angeordnet, der der Erwärmung der Schweißstelle am Grundkörper, auf den das Anschweißteil aufgeschweißt wird, und Anschweißteil dient. Der Schweißspiegel kann nach dem Erwärmen der Schweißstelle mittels eines Antriebmittels aus seiner Lage zwischen Anschweißteil und Grundkörper gebracht werden, so daß das Anschweißteil in Anlage mit dem Grundkörper gebracht werden kann.

Derartige Schweißköpfe werden für viele Formen des Heizelementschweißens, insbesondere bei thermoplastischen Kunststoffen, verwendet. Ein Anwendungsgebiet des Heizelementschweißens liegt im Bereich des Aufschweißens von Anschweißteilen an als Blasteile gefertigten Grundkörpern, beispielsweise Kraftstofftanks für Kraftfahrzeuge.

Schweißköpfe mit doppelt wirkenden Schweißspiegeln haben den Nachteil, daß eine Erwärmung der Schweißstellen sowohl an Grundkörper als auch an Anschweißteil gleichzeitig erfolgt und stets von gleicher Zeitdauer ist. Dadurch kann bei Verwendung unterschiedlicher thermoplastischer Kunststoffe für Grundkörper und Anschweißteil den unterschiedlichen An- und Aufschmelzzeiten verschiedener thermoplastischer Kunststoffe nur schlecht Rechnung getragen werden.

Die US-A-5 614 118 zeigt eine Schweißvorrichtung mit einem portalartigen Gestell und drei daran vertikal und horizontal verfahrbaren Einheiten, von denen zwei die für den Grundkörper und das Anschweißteil benötigten Schweißspiegel sind, während das dritte den Greifer für das Anschweißteil bildet. In einer weiteren Ausführung sind beide Schweißspiegel an einem Arm befestigt, während der Greifer auch gesondert eine Einheit bildet. Das Portal ist sehr groß und die Schweißvorrichtung ist zur Bearbeitung von in vorbestimmter Lage zugeführten bzw. liegenden Gegenständen vorgesehen.

Die US-A-5 006 197 hat einen Schweißkopf, der einen daran linear verfahrbaren Greifer für das Anschweißteil und ein bügel- oder brückenförmiges Tragelement aufweist, an dem Schweißspiegel sowohl für den Grundkörper als für das Anschweißelement vorgesehen sind. An diese wird sowohl der Grundkörper als das Anschweißteil angedrückt und nach Erreichen der Schweißwärme das gesamte Tragelement mit dem Schweißspiegel weggeschwenkt, um Platz für das Anschweißteil zu machen. Dieser Schweißkopf baut relativ groß.

Aufgabe der Erfindung ist es, einen Schweißkopf für das Heizelementschweißen bereitzustellen, der ein unabhängiges Erwärmen von Anschweißstelle am Grundkörper und Anschweißteil ermöglicht.

Diese Aufgabe wird erfindungsgemäß durch einen Schweißkopf mit den Merkmalen des Anspruchs 1 gelöst.

Ein derartiger Schweißkopf für das Heizelementschweißen, insbesondere von thermoplasfischen Kunststöffen, weist einen Greifer zum Aufnehmen des am Grundkörper anzuschweißenden Anschweißteiles auf. Er weist ferner einen ersten Schweißspiegel zum Erwärmen der Schweißstelle am Grundkörper auf. Ein zweiter Schweißspiegel dient dem Erwärmen der Schweißstelle am Anschweißteil. Dabei sind der erste Schweißspiegel und der Greifer auf einem gemeinsamen Tragelement angeordnet. Dieses Tragelement ist durch Antriebsmittel derart verschwenkbar, daß wechselweise erster Schweißspiegel und Greifer auf die Schweißstelle am Grundkörper hin ausgerichtet sind.

Gemäß der Erfindung sind also zwei getrennte Schweißspiegel vorgesehen, wobei der erste der beiden Schweißspiegel der Erwärmung der Schweißstelle am Grundkörper dient und alternativ zum Erwärmen des Anschweißteiles dient. Somit ist ein unabhängiges Erwärmen von Anschweißteil und Grundkörper im Bereich der jeweiligen Schweißstelle möglich. Somit können auch unterschiedliche Thermoplaste miteinander verschweißt werden, wobei eine gute Qualität der Schweißverbindung sichergestellt ist. Die Qualität einer derartigen Schweißverbindung bemißt sich an ihrer Steifigkeit und Festigkeit sowie an ihrer Dichtheit.

Das Tragelement wird verschwenkt, dabei erfolgt vorzugsweise das Verschwenken mit dem ersten Schweißspiegel und dem Greifer um eine Achse, die rechtwinklig zu der Verbindungslinie zwischen Greifer und ersten Schweißspiegel, die einander gegenüberliegend auf dem Tragelement angeordnet werden, verläuft. Dabei beträgt der Winkel, um den das Tragelement verschwenkt wird, 180°.

Eine solche Ausgestaltung hat den Vorteil, daß der Schweißkopf sehr klein bauend und einen lediglich geringen Bewegungsraum in Anspruch nehmend ausgebildet werden kann. Dies ermöglicht es, den Schweißkopf flexibler, beispielsweise auch weniger zugänglichen Schweißstellen, zu verwenden.

Gemäß weiterer bevorzugter Ausgestaltung der Erfindung ist der zweite Schweißspiegel mit dem im Greifer gehaltenen Anschweißteil dann in Anlage bringbar, wenn der erste Schweißspiegel auf den Grundkörper hin ausgerichtet ist.

Gemäß weiter bevorzugter Ausgestaltung wird der zweite Schweißspiegel über einen Linearsteller aus seiner Eingriffslage mit dem Anschweißteil in eine Nichteingriffslage und zurück verfahren.

Gemäß weiter bevorzugter Ausgestaltung erfolgt das Verfahren des zweiten Schweißspiegels gegenüber dem Tragelement.

Weiter vorteilhaft ist es, das Tragelement und den zweiten Schweißspiegel mit seinem Verfahrantrieb auf einer gemeinsamen Grundplatte anzuordnen. Weiter bevorzugt ist die Ausgestaltung, in der die Grundplatte auf ihrer dem Tragelement abgewandten Seite Kupplungsstellen zur insbesondere selbsttätigen An- und Abkopplung der Grundplatte von einem Roboterarm aufweist.

Dies ermöglicht es zum einen, den Schweißkopf in möglichst einfacher Weise an dem Stellantrieb, vorzugsweise einem Industrieroboter, anzuordnen. Somit können mit einem Zustellelement unterschiedliche Schweißköpfe angetrieben werden und dadurch vielfältige Anschweißteile an einen einzigen Grundkörper angeschweißt werden. Grundsätzlich werden durch diese Maßnahmen die Rüstzeiten zum Auswechseln des Schweißkopfes verringert.

Weiter bevorzugt ist die Ausgestaltung, in der der Greifer für das Anschweißteil insbesondere selbsttätig auswechselbar ist. Dies ermöglicht es, unterschiedliche Greifer für unterschiedliche Anschweißteile zu verwenden, sofern die Anschweißteile mit den gleichen Schweißspiegeln erwärmbar sind. Auch dies ermöglicht es, mit dem gleichen Schweißkopf flexibler auf die Anforderung der Anschweißteile zu reagieren.

Es ist gemäß Ausgestaltungen möglich, die Antriebsmittel für das Verfahren des Tragelementes mit Greifer und erstem Schweißspiegel sowie den Linearsteller für den Antrieb des zweiten Schweißspiegels elektrisch und/oder pneumatisch anzutreiben.

Gemäß bevorzugter Ausgestaltung der Erfindung ist der Schweißkopf als Endeffektor eines Industrieroboters ausgebildet.

Ausgestaltungen der Erfindung sind in den Unteransprüchen enthalten. Im übrigen ist eine Ausführung der Erfindung in der Zeichnung dargelegt. Es zeigen:
- Fig. 1: einen Schweißkopf in seiner Stellung nach der Aufnahme des Anschweißteiles vor Beginn des Anschweißvorgangs,
- Fig. 2: den Schweißkopf der Fig. 1 in der Stellung, in der sowohl Anschweißteil als auch Grundkörper an- und aufgeschmolzen werden,
- Fig. 3: den Schweißkopf der Fign. 1 und 2 in der Stellung, in der das Anschweißteil in Eingriff mit der Schweißstelle am Grundkörper gebracht werden kann,
- Fig. 4: einen Industrieroboter mit einem schematisch dargestellten Schweißkopf als Endeffektor,
- Fig. 4a: einen Industrieroboter mit einem Schweißkopf, der sich in Anlage an einem Grundkörper befindet,
- Fig. 5: einen schematisch dargestellten Schweißkopf mit seiner Ankopplung an den Arm des Industrieroboters, und
- Fig. 6: das schematische Flußdiagramm eines Verfahrens zum Anschweißen eines Anschweißteiles mit einem Schweißkopf und einem Industrieroboter.

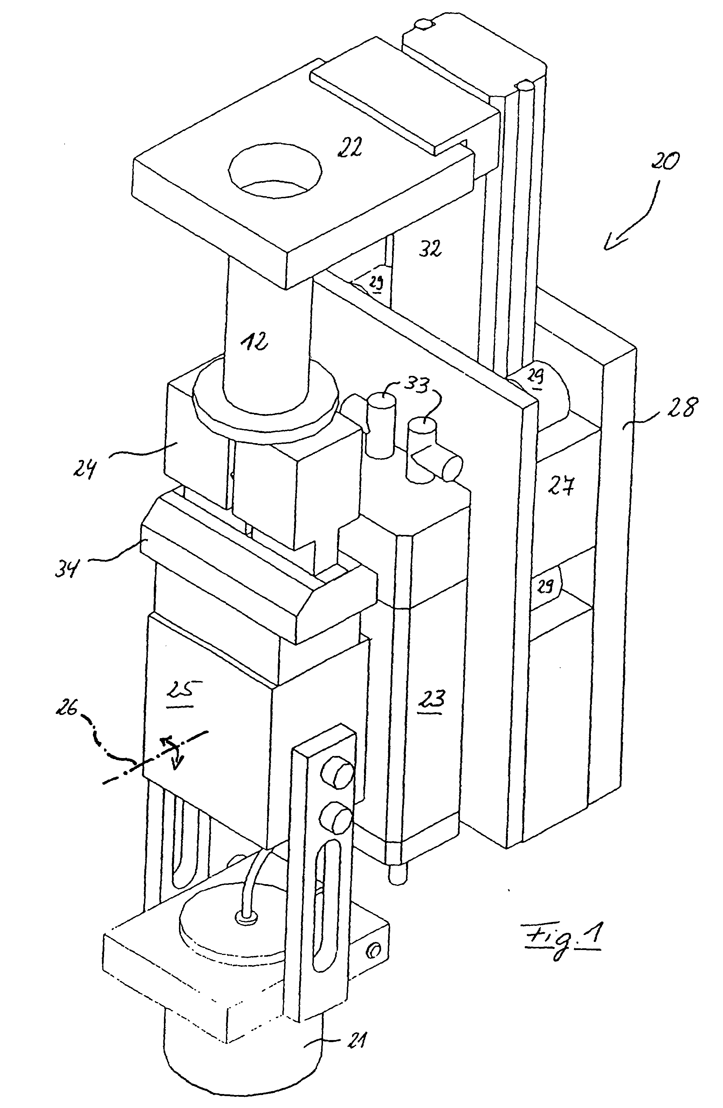

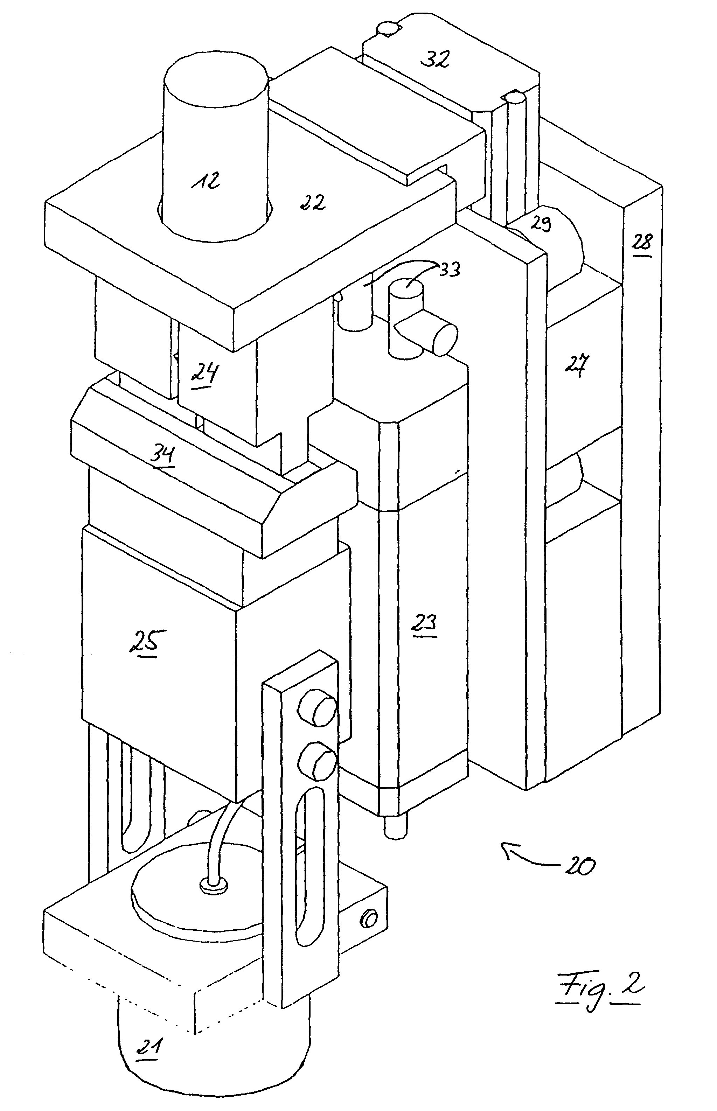

Die Fig. 1 zeigt den Schweißkopf 20, der geeignet ist, als Endeffektor eines Schweißroboters zu dienen und mittels dem Anschweißteil und Grundkörper unabhängig voneinander an- und aufgeschmolzen werden kann. Auf der Grundplatte 28 ist einerseits das Tragelement 25 und andererseits der Linearsteller 27 mit dem über die Antriebsrollen 29 linear verfahrbaren Ständer 32, an dessen Ende der zweite Schweißspiegel 22 angeordnet ist, befestigt.

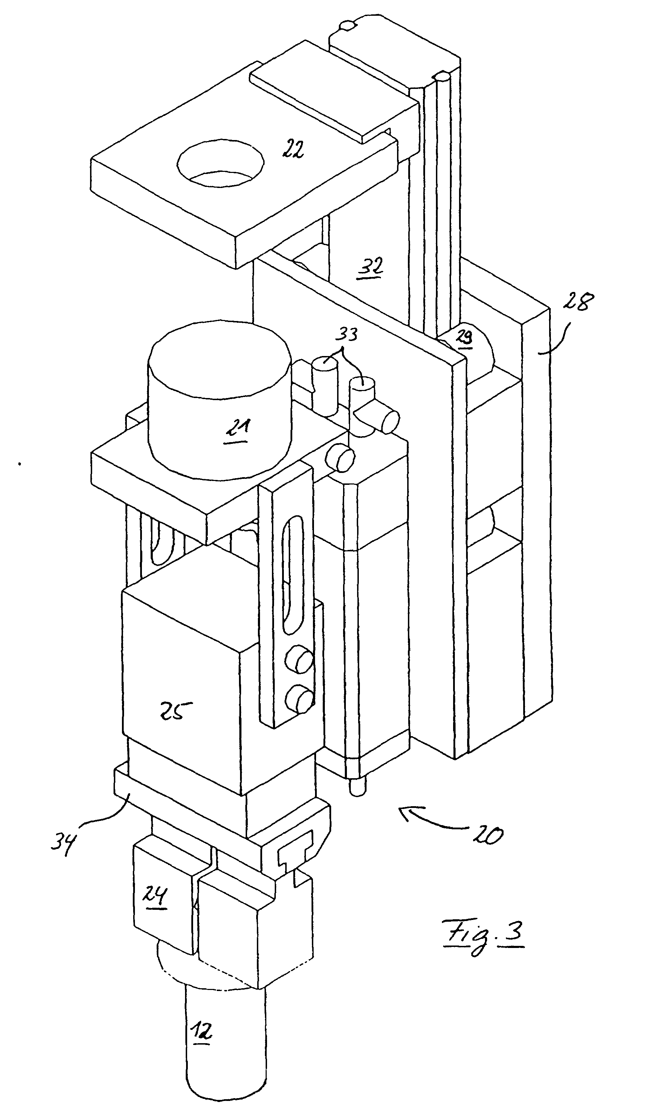

Dabei handelt es sich bei dem Linearsteller 27 um einen pneumatischen Stellantrieb oder vorzugsweise um einen elektrisch angetriebenen Schrittmotor, der über ein Getriebe auf wenigstens einen Teil der Antriebsrollen 29 einwirkt. Die Antriebsrollen 29 sind entweder Reibrollen, die an der Flanke des Ständers 32 angreifen und somit reibschlüssig ein Verfahren des Ständers 32 und somit des zweiten Schweißspiegels 22 aus einer dargestellten Nichteingriffsstellung in die in Fig. 2 dargestellte Eingriffsstellung ermöglicht. Alternativ zu den Reibrollen kann als Antriebsrollen 29 auch ein Zahnantrieb mit Zahnrädern und am Ständer 32 ausgebildeter Zahnstange verwendet werden. Dabei erfolgt das Verfahren des Ständers 32 bzw. des zweiten Schweißspiegels 22 derart, daß die Anlagekraft des Schweißspiegels 22 am Anschweißteil 12 gesteuert bzw. geregelt wird. Dies ermöglicht es, mit unterschiedlichen Anlagekräften des Schweißspiegels 22 am Anschweißteil 12 zunächst ein Anschmelzvorgang und anschließend mit geringerer Kraft einen Aufschmelzvorgang der Schweißstelle am Anschweißteil 12 vorzunehmen.

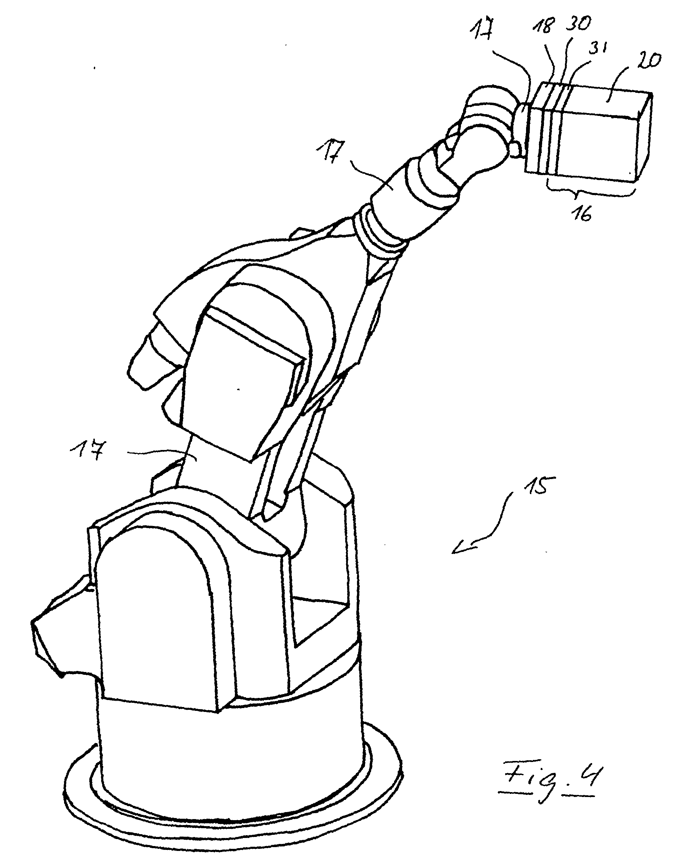

Auf der Grundplatte 28 ist auch das Antriebsmittel 23 für das Verfahren des Tragelementes 25 angeordnet. Dabei handelt es sich vorzugsweise um einen fluidisch, insbesondere pneumatisch angetriebenen Drehsteller, der über die zu den Leitungsstutzen 33 führenden, hier nicht dargestellten Fluidikleitungen versorgt wird. Das Tragelement 25 kann um die Schwenkachse 26 herum um 180° verschwenkt werden, so daß wahlweise entweder der erste Schweißspiegel 21 - wie in Fig. 1 dargestellt - zur Schweißstelle des Grundkörpers hin ausgerichtet ist bzw., daß - wie in Fig. 3 dargestellt - der Greifer, mit den in ihm gehaltenen Anschweißteil - zur Anschweißstelle - am Grundkörper hin ausgerichtet ist.

In der in Fig. 1 dargestellten Lage befindet sich der Schweißkopf immer dann, wenn nach dem Aufnehmen des Anschweißteiles durch den Greifer 24 das Tragelement 25 so um 180° verschwenkt wurde, daß der erste Schweißspiegel 21 in Eingriff mit der Schweißstelle des Grundkörpers gelangen kann. In dieser Stellung wird der Schweißkopf zum Grundkörper hin verfahren und er befindet sich auch in dieser Stellung, solange lediglich der Grundkörper mittels des ersten Schweißspiegels 21 erwärmt wird, ein Erwärmen des Anschweißteiles 12 jedoch noch nicht erfolgen soll.

Die Fig. 2 zeigt den Schweißkopf 20 der Fig. 1 in einer Stellung, wie er sich während des Erwärmens der Schweißstellen sowohl von Grundkörper als auch von Anschweißteil 12 befindet. Um aus der in der Fig. 1 dargestellten Stellung in die in Fig. 2 dargestellte Stellung zu gelangen, wird über den Linearsteller 27 mit seinen Antriebsrollen 29 der Ständer 32 verfahren. Somit gelangt der Schweißspiegel 22, der an dem Ständer 32 befestigt ist, in Anlage mit der Schweißstelle des Anschweißteiles 12. Dabei ist der Schweißspiegel 22 so ausgebildet, daß lediglich die im Bereich der Schweißstelle liegenden Teile des Anschweißteils 12 in Anlage mit dem Schweißspiegel 22 gelangen. Neben einem vollflächigen Schweißspiegel kann er, wie dargestellt, insbesondere eine Ausnehmung aufweisen, die dazu dient, daß in den Grundkörper hineinragende Teile nicht in Anlage mit dem Schweißspiegel 22 gelangen. Der Schweißspiegel 22 wird dazu mit dem Ständer 32 in Richtung auf den Greifer 24 verfahren. Das Verfahren erfolgt dabei kraftgesteuert bzw. kraftgeregelt so weit, bis die Eingriffsstellung des Schweißspiegels 22 erreicht wird. Vorzugsweise ist die Eingriffsstellung erreicht, wenn die Anlagekraft des Schweißspiegels 22 an dem Anschweißteil 12 einen vorgegebenen Kraftwert erreicht, wobei dieser Kraftwert unterschiedliche Vorgaben in Abhängigkeit der Anlagezeit aufweisen kann. So kann für eine erste Anwärmphase des thermoplastischen Kunststoffes des Anschweißteiles 12 eine höhere Anlagekraft des Schweißspiegels 22 gewählt werden als für eine darauffolgende Aufweichphase für das thermoplastische Material des Anschweißteiles 12 im Bereich der Schweißstelle.

Eine Veränderung der Lage des Tragelementes 25 mit dem Greifer 24 und dem ersten Schweißspiegel 21 durch die Antriebsmittel 23 ist noch nicht erfolgt.

In der in Fig. 2 dargestellten Stellung befindet sich der Schweißkopf 20 dann, wenn sich der erste Schweißspiegel 21 in Anlage mit der Schweißstelle des Grundkörpers befindet und gleichzeitig die Erwärmung des Anschweißteiles 12 erfolgen soll. Nach Beendigung des An- und Aufschmelzens des thermoplastischen Kunststoffes des Anschweißteiles 12 wird der Schweißspiegel mittels des Ständers 32 und dem Linearantrieb 27 wieder in die in Fig. 1 dargestellte Stellung verfahren. Dabei kann sich der erste Schweißspiegel 21 noch in Anlage mit dem Grundkörper befinden. Erst wenn auch am Grundkörper die An- und Aufschmelzphase beendet ist, wird der Schweißkopf 20 von der Schweißstelle am Grundkörper weggefahren und zwar zumindest soweit, daß ein Verfahren des ersten Schweißspiegels und des Anschweißteiles durch Verschwenken des Tragelementes 25 um die Schwenkachse 26 durch das Antriebsmittel 23 so erfolgen kann, daß der Grundkörper dabei außerhalb des Bewegungsraumes von Anschweißteil 12 und dem Schweißkopf 20 liegt.

Durch die Schwenkbewegung des Tragelementes 25 um die Schwenkachse 26 aus der in der Fig. 1 dargestellten Stellung um 180° wird die in der Fig. 3 dargestellte Stellung erreicht.

Wie in Fig. 3 gezeigt, befindet sich nun das Anschweißteil 12 und der Greifer 24 des Schweißkopfes 20 in einer Stellung, die auf die Schweißstelle am Grundkörper hin ausgerichtet ist. Die Stellung der Fig. 3 wird aus der in Fig. 1 dargestellten Stellung durch Verschwenken des Tragelementes 25 um die Schwenkachse 26 erreicht. Anstelle des Verschwenkens um 180° ist es bei entsprechend anderer Anordnung von Greifer 24 und erstem Schweißspiegel 21 am Tragelement 25 auch möglich, mit geringeren Schwenkwinkeln (beispielsweise 90°) andere Verfahrantriebe vorzusehen, die einerseits den ersten Schweißspiegel 21 in eine Stellung verfahren, in der er nicht mehr in Anlage mit dem Grundkörper, an dem das Anschweißteil 12 angeschweißt wird, gelangt und gleichzeitig das Anschweißteil 12 bzw. der Greifer 24 des Schweißkopfes 20 hin zum Grundkörper ausgerichtet werden. Vorteilhaft ist es aber, wenn der zweite Schweißspiegel 22 dann in Eingriff mit dem Anschweißteil 12 bringbar ist, wenn der erste Schweißspiegel 21 in seiner Wirkstellung ist, also auf die Schweißstelle 13 am Grundkörper 11 hin ausgerichtet ist.

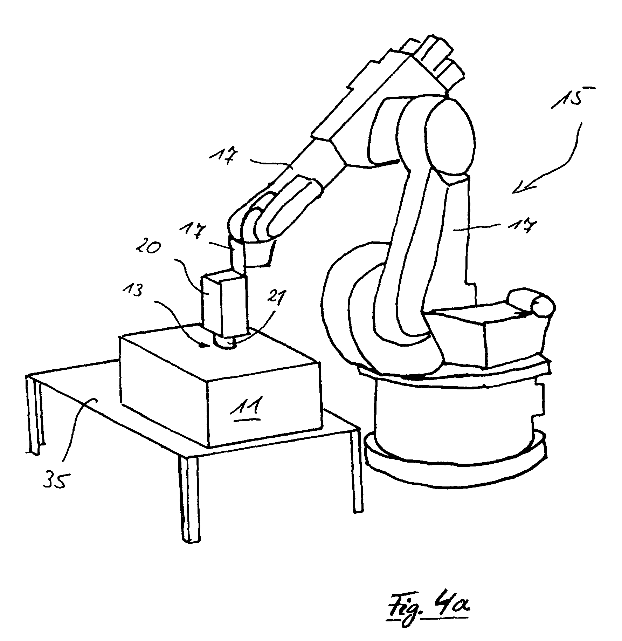

Die Fig. 4 zeigt den Schweißkopf 20 in schematischer Darstellung, wie er als Endeffektor eines Industrieroboters 15 angeordnet sein kann.

Der Industrieroboter 15 ist um seine Arme 17 und senkrecht dazu verschwenkbar. Es handelt sich also um einen 6-Achsen-Roboter. Dieser Roboter ist in der Lage, durch Koordinatensteuerung nahezu jeden Punkt inerhalb seines Bewegungsraumes anzufahren und dabei den Schweißkopf entsprechend einer gewünschten Richtung auszurichten. Damit der Schweißroboter auch das kraftgeregelte Anliegen des Schweißkopfes 20 an den Grundkörper durchführen kann, weist der Industrieroboter einen Kraftsensor 18 auf, der zwischen dem Roboterarm 17 und dem roboterarmseitigen Kupplungsstück 30 angeordnet ist. Der Kraftsensor ist dabei nicht nur in der Lage, die axial zum Roboterarm 17 wirkende Kraft zu erfassen, er erfaßt vielmehr vorzugsweise auch Kräfte in andere Richtungen. Am besten ist es, wenn die Auflösung des Kraftsensors 18 es erlaubt, die auf ihn einwirkenden Kräfte und Momente in allen Richtungen zu erfassen. Werden alle Kräfte und Momente erfaßt, so ist es möglich, den Endeffektor 16 mit dem Schweißkopf 20 so in Anlage mit dem Grundkörper zu bringen, daß Kippmomente oder Drehmomente, die zwischen Grundkörper und Schweißkopf 20 wirken könnten, durch entsprechendes Verfahren des Schweißkopfes 20 durch den Industrieroboter ausgeglichen werden können. Auch eine Nachführung des Schweißkopfes entsprechend der während des Schweißvorganges aufgrund der eingeleiteten Kräfte auftretenden reversiblen Verformung des Grundkörpers ist möglich.

Die Fig. 4a zeigt in schematischer Darstellung den Schweißkopf 20 als Endeffektor eines Industrieroboters 15 in seiner Stellung zu einem Grundkörper 11. Dabei befindet sich der erste Schweißspiegel 21 des Schweißkopfes 20 in der Schweißstelle 13 in Anlage mit dem Grundkörper 11. Der Grundkörper 11 ist dabei auf einem Spannkörper 35 eingespannt und wird bzgl. des Schweißroboters 15 in definierter Lage gehalten. Durch Verfahren des Schweißroboters kann nahezu jede beliebige Schweißstelle an der Oberfläche des Grundkörpers 11 angefahren werden. Auch kann der Schweißkopf 20 nahezu beliebig zum Grundkörper 11 hin ausgerichtet werden.

Vorzugsweise wird der Schweißkopf 20 so zum Grundkörper 11 hin ausgerichtet, daß die letzte Zustellbewegung, die kraftgeregelt vorgenommen wird, entlang einer vorgeschriebenen, vorzugsweise linearen Bewegung senkrecht zur Oberfläche des Grundkörpers 11 in der Schweißstelle 13 erfolgt. Die genaue Kenntnis der Lage des Grundkörpers 11 bzgl. dem Industrieroboter 15 ist erforderlich, um die Koordinaten zu berechnen, an dem von der Positionssteuerung und Ausrichtung des Schweißkopfes 20 auf die Kraftregelung übergegangen wird. Sie kann unter Umständen auch durch geeignete Sensoren, beispielsweise optische Erfassungsmittel, erfaßt werden. Ebenso kann auch die genaue Lage des Grundkörpers durch entsprechende Sensoren erfaßt und entsprechend berücksichtigt werden.

Damit ein einfaches und schnelles Wechseln des Schweißkopfes 20 möglich ist, ist entweder die Grundplatte 28 bzw. ein mit der Grundplatte 28 verbundenes Teil als Kupplungsstück 31 als Gegenstück zum Kupplungsstück 30 des Roboterarmes ausgebildet. Über die beiden Kupplungsstücke wird nicht nur eine lagedefinierte Verbindung zwischen Roboterarm 17 und Endeffektor 16 mit dem Schweißkopf 20 ausgebildet. Vielmehr werden vorzugsweise gleichzeitig alle elektrischen und fluidischen Verbindungen miteinander verkuppelt bzw. kontaktiert.

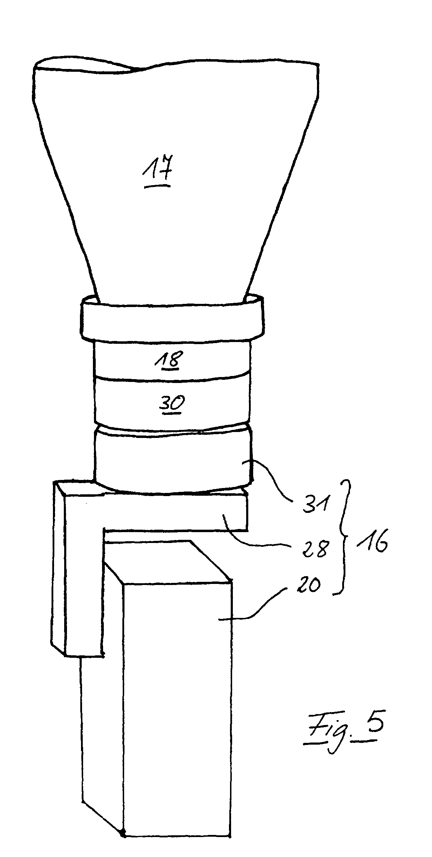

Die Fig. 5 zeigt das Ende des Roboterarmes 17, das dem Endeffektor 16 zugewandt ist. Am Ende des Roboterarmes 17 befindet sich zunächst der Kraftsensor 18, der in der Lage ist, Kräfte, vorzugsweise Kräfte und Momente in allen Richtungen, zu erfassen. Nach dem Kraftsensor 18 befindet sich am Roboterarm 17 das Kupplungsstück 30 zum Ankoppeln des Endeffektors. Der Endeffektor 16 besteht bei dieser Anwendung aus dem entsprechenden Kupplungsstück 31 zum Ankoppeln des Endeffektors an den Roboterarm, und dem Schweißkopf 20 mit seiner Grundplatte 28, die gemäß dieser Zeichnung abgewinkelt ist, damit eine koaxiale Ausrichtung des Schweißkopfes 20 zur Längsachse des Roboterarmes 17 ermöglicht wird. Die Längsachse des Schweißkopfes 20 wird dabei in der Ausgestaltung gemäß den Fign. 1 und 3 durch die Verbindungslinie zwischen Greifer 24 und erstem Schweißspiegel 21 definiert.

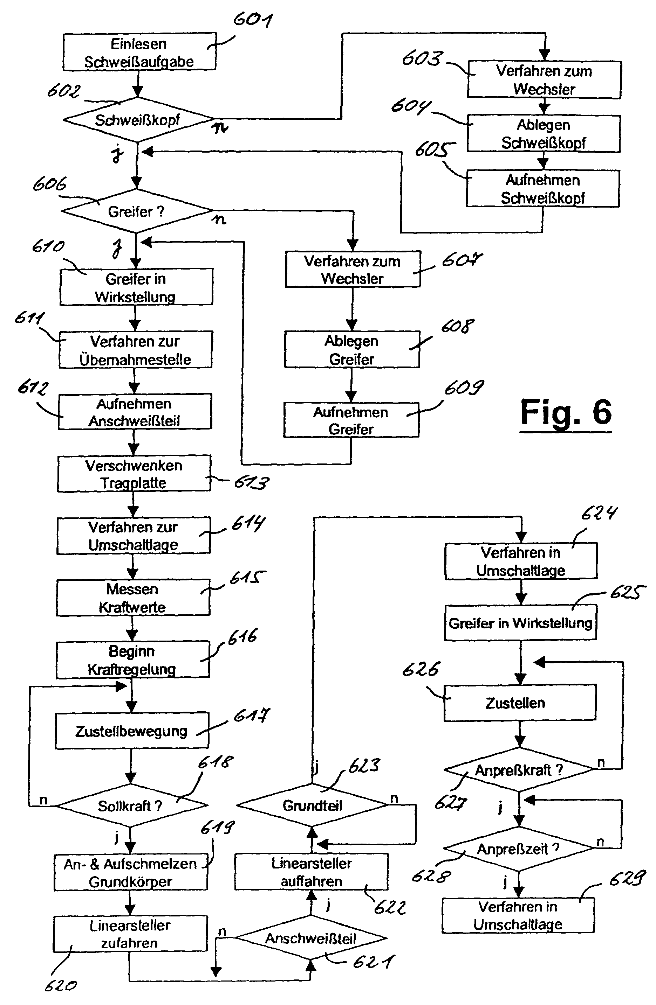

Die Fig. 6 zeigt das Flußdiagramm eines Verfahrens zum Anschweißen eines Anschweißteiles an einem Grundkörper, wie es mit einem Schweißkopf gemäß den Fign. 1 bis 3 und einem Industrieroboter mit anmontiertem Schweißkopf gemäß den Fign. 4, 4a und 5 möglich ist.

Gemäß dem Schritt 601 erfolgt zunächst das Einlesen der bevorstehenden Schweißaufgabe. Darunter wird verstanden, daß zunächst beispielsweise aus einem Speicher eingelesen wird, welches Anschweißteil 12 an welcher Schweißstelle 13 am Grundkörper 11 befestigt werden soll. Die Schweißaufgabe kann dabei innerhalb einer zyklisch abgerufenen Folge einzelner Schweißaufgaben oder auch manuell vorgegeben aufgerufen werden. Die Daten einer Schweißaufgabe können vorzugsweise in sog. teach-in-Verfahren erfaßt werden. Es ist auch möglich, sofern entsprechende Informationen maschinell erfaßbar vorliegen, eine auszuführende Folge oder auch einzelne Schweißaufgabe in Abhängigkeit des bereitgestellten Grundkörpers durchzuführen. Die Informationen können zum Beispiel durch optische Erkennung des Grundkörpers und ggf. auch seiner Bestückung mit Anschweiß- oder Anbauteilen erlangt werden. Durch die Informationen bzgl. der Schweißaufgabe wird nicht nur die Umschaltlage vom Übergang von der Positionssteuerung auf die Kraftsteuerung des Endeffektors des Industrieroboters bestimmt, es bestimmt sich vielmehr auch, wie der Schweißkopf gestaltet sein muß und ob evtl. am Schweißkopf ein Wechsel des montierten Greifers erfolgen soll.

Gemäß dem Schritt 602 wird aufgrund der eingelesenen Schweiß-aufgabe ermittelt, ob die Schweißaufgabe mit dem derzeit als Endeffektor montierten Schweißkopf 20, insbesondere mit den derzeit montierten Schweißspiegeln 21, 22, durchgeführt werden kann. Ist ein Schweißkopfwechsel nicht erforderlich, so wird zum Schritt 606 gesprungen. Andernfalls wird gemäß dem Schritt 603 der derzeit montierten Schweißkopf zu einem Schweißkopf-Wechsler verfahren und dort vorzugsweise selbsttätig vom Roboterarm 17 abgekuppelt. Dies geschieht vorzugsweise durch Lösen der Wirkverbindung zwischen den beiden Kupplungsstücken 30, 31, gemäß dem Schritt 604. Gemäß dem Schritt 605 wird dann der Roboterarm, nunmehr ohne Endeffektor, zu der Stelle verfahren, an dem der andere Schweißkopf angekuppelt werden kann. Die Verkupplung erfolgt dabei gemäß dem Schritt 605 vorzugsweise selbsttätig zwischen einem Kupplungsstück 30 am Roboterarm und dem Kupplungsstück 31 an dem Schweißkopf. Anschließend wird zum Schritt 606 übergegangen.

In dem Schritt 606 wird nun überprüft, ob der derzeit montierte Schweißkopf auch den richtigen Greifer aufweist. Ist am Schweißkopf ein tauglicher Greifer angeordnet, so wird zum Schritt 610 gesprungen. Andernfalls wird gemäß dem Schritt 607 der Endeffektor zum Greiferwechsler verfahren. Während dieses Vorganges muß auch sichergestellt werden, daß der Greifer zugänglich ausgerichtet ist, d.h. daß das Tragelement 25 so geschwenkt ist, daß der Greifer auf einen Grundkörper hin ausgerichtet ist und nicht auf den zweiten Schweißspiegel 22.

Gemäß dem Schritt 608 wird nun durch selbsttätiges öffnen der Halterung 34 für den Greifer der auszutauschende Greifer abgelegt. Anschließend wird gemäß dem Schritt 609 der Schweißkopf zum aufzunehmenden Greifer hin verfahren und der Greifer wiederum selbsttätig mit der Halterung 34 für den Greifer 24 verkoppelt. Dann wird zum Schritt 610 übergegangen.

Für die Durchführung der Schritte 602 bis 609 ist es möglich, daß mitprotokolliert wird, welcher Schweißkopf bzw. welcher Greifer sich gerade an welchem Ort befindet. Einfacher ist es, wenn die Greifer und Schweißköpfe entsprechende, maschinell verarbeitbare Identifikationsmerkmale aufweisen.

Gemäß dem Schritt 610 wird, falls dies noch nicht geschehen ist, der Greifer in die Wirkstellung verfahren, d.h. das Tragelement 25 wird so verschwenkt, daß der Greifer wie in Fig. 3 dargestellt nach unten, zu einem eventuellen Grundkörper 11 hin und nicht zum Schweißspiegel 22 hin ausgerichtet ist.

Anschließend wird der Schweißkopf als Endeffektor des Industrieroboters zur Übernahmestelle des Anschweißteiles verfahren. Gemäß dem Schritt 612 wird das Anschweißteil in der Übernahmestelle von dem Greifer ergriffen. Nach dem Ergreifen des Anschweißteiles wird gemäß dem Schritt 613 die Tragplatte verschwenkt. Durch dieses Verschwenken ist nunmehr das Anschweißteil zum zweiten Schweißspiegel hin ausgerichtet, während der erste Schweißspiegel nunmehr in die Lage gelangt, in die es in Eingriff mit dem Grundkörper gelangen kann.

Nunmehr wird gemäß dem Schritt 614 der Endeffektor des Industrieroboters, also der Schweißkopf, koordinatengesteuert bis zur Umschaltlage verfahren. Die Umschaltlage ist dabei nicht nur ein Raumpunkt, den der Industrieroboter anfährt, vielmehr bezieht die Umschaltlage auch die Ausrichtung des Schweißkopfes zur Schweißstelle am Grundkörper hin ein. Die Koordinatensteuerung erfolgt dabei so, daß der Schweißkopf zu einem bestimmten Raumpunkt, der zusammen mit der Schweißaufgabe vorgegeben oder ermittelt wird, gefahren und ausgerichtet wird. Das positionsgesteuerte Verfahren erfolgt in für Industrieroboter üblicher Weise.

Nach dem Erreichen der Umschaltlage wird gemäß dem Schritt 615 durch den Kraftsensor zwischen Endeffektor (Schweißkopf) und Roboterarm gemessen, welche Kräfte auf den Roboterarm wirken. Diese werden als Bezugspunkt gewählt, d.h. es werden nunmehr alle Kraftkomponenten auf Null gesetzt. Gemäß dem Schritt 616 beginnt nun die kraftgeregelte Zustellbewegung. Hierzu wird entweder der erforderliche Zustellweg durch Rechnung ermittelt oder aber der Zustellweg, der zusammen mit der Schweißaufgabe vorgegeben wurde, aktiviert. Vorzugsweise ist die Umschaltlage so gewählt, daß der Zustellweg eine lineare Bewegung auf der Normalen zur Schweißstelle am Grundkörper ist. Gemäß dem Schritt 617 wird die Zustellbewegung entlang des vorgegebenen Weges begonnen. Es wird nun im Schritt 618 überprüft, ob die im Kraftsensor erfaßte aktuelle Kraft zwischen Schweißkopf und Roboterarm der zum Beispiel zusammen mit der Schweißaufgabe vorgegebenen Sollkraft entspricht. Die Sollkraft wird dabei zusammen mit der Schweißaufgabe festgelegt. Es handelt sich um eine für jeden schweißvorgang anders vorgebbare Größe, wobei die Kraftrichtung vorzugsweise jeweils so bestimmt ist, daß sie in der Flächennormale zur Schweißstelle am Grundkörper liegt. Vorzugsweise erfolgt auch die Zustellbewegung genau in dieser Richtung. Solange im Schritt 618 nicht erkannt wurde, daß die Sollkraft erreicht wurde, wird zum Schritt 617 zurückgesprungen und die Zustellbewegung fortgesetzt.

Wurde im Schritt 618 erkannt, daß die Sollkraft erreicht wurde, so erfolgt gemäß dem Schritt 619 der An- und Aufschmelzvorgang des Grundkörpers in der Schweißstelle. Dies geschieht dadurch, daß der erste Schweißspiegel 21 sich in Anlage mit der Schweißstelle 13 des Grundkörpers befindet. Dabei kann es sinnvoll sein, während des Anschmelzens eine größere Kraft zwischen Grundkörper 11 und Schweißspiegel 21 aufrechtzuerhalten, wie während des Aufschmelzens. Dies wird über entsprechende Fortführung der Kraftregelung erreicht. Sofern geeignete Kraftkomponenten und Kraftmomente zwischen Grundkörper und Schweißkopf über den Kraftsensor 18 möglich ist, können Scher- und Kippmomente zwischen Schweißkopf 20 und Grundkörper durch entsprechende Weiterführung der Kraftregelung ausgeglichen werden.

Nunmehr wird gemäß dem Schritt 620 auch der Linearsteller zugefahren. Darunter ist zu verstehen, daß der zweite Schweißspiegel in Anlage mit der Schweißstelle des Anschweißteiles gebracht wird. Der Zeitpunkt des Zufahrens des Linearstellers ist dabei vorzugsweise so bestimmt, daß das An- und Aufschmelzen des Anschweißteiles möglichst zeitgleich mit dem An- und Aufschmelzen des Grundkörpers an der jeweiligen Schweißstelle beendet wird. Das hier dargestellte Flußdiagramm berücksichtigt den Fall, daß das An- und Aufschmelzen des Anschweißteiles weniger lang dauert, als das An- und Aufschmelzen des Grundkörpers. Liegt der umgekehrte Fall vor, so ist es auch möglich, den Linearsteller zuzufahren, bevor der erste Anschweißspiegel sich in Anlage mit dem Grundkörper befindet. Es kann dies insbesondere während des Ablaufes der Zustellbewegung geschehen. Ferner ist zu beachten, daß der An- und Aufschmelzvorgang des Anschweißteiles auch erst dann beendet werden kann, wenn das Entfernen des ersten Schweißspiegels von der Schweißstelle am Grundkörper bereits stattfindet.

Gemäß dem Schritt 621 wird nun überprüft, ob das Anschweißteil in erforderlicher Weise an- und aufgeschmolzen wurde. Dies geschieht beispielsweise über eine Zeitsteuerung. Wird im Schritt 621 festgestellt, daß das entsprechende Zeitintervall noch nicht abgelaufen ist, so wird das Ende dieses Zeitintervalls abgewartet.

Sobald das entsprechende Zeitintervall abgelaufen ist, wird gemäß dem Schritt 622 der Linearsteller wieder aufgefahren, d.h. der zweite Schweißspiegel wird von seiner Einstellung wieder in die Nichteingriffsstellung verfahren.

Gemäß dem Schritt 623 wird nun abgewartet, bis das Zeitintervall für das An- und Aufschmelzen des Grundkörpers bereits erfolgt ist. Ist dies nicht der Fall, so wird abgewartet, bis dieses Zeitintervall verstrichen ist. Anstelle des Zeitkriteriums kann auch ein anderes Kriterium für das Beenden des Anund Aufschmelzvorganges am Grundkörper verwendet werden.

Anschließend wird gemäß dem Schritt 624 der Schweißkopf wieder in seine Umschaltlage verfahren. Dabei wird nur gemäß der hier dargestellten bevorzugten Ausführungsform der Schweißkopf wieder in die Umschaltlage verfahren. Es würde auch genügen, den Schweißkopf in eine andere Zwischenlage zu verfahren, in der sichergestellt ist, daß die Verfahrbewegung des Schweißkopfes zwischen der Anwärmstellung und der Andrückstellung des Anschweißteiles verfahren werden kann, ohne daß eine Kollision etwa mit dem Grundkörper auftritt. Um eine bessere Verfahrsteuerung zu erreichen, ist es jedoch vorteilhaft, als Zwischenlage die Umschaltlage anzufahren.

Gemäß dem Schritt 625 wird nun der Greifer in seine Wirkstellung verfahren, d.h. das Tragelement 25 wird so verschwenkt, daß das im Greifer gehaltene Anschweißteil auf die Schweißstelle am Grundkörper hin ausgerichtet wird. Entsprechend den Schritten 617 und 618 erfolgt nun gemäß den Schritten 626 und 627 ein kraftgeregeltes Zustellen des Schweißkopfes. Die Schweißstelle des Anschweißteiles gelangt in Anlage an die Schweißstelle des Grundkörpers. Dabei ist die Anpreßkraft geregelt, und zwar vorzugsweise so, daß eine flächennormale Kraft zum Grundkörper hin besteht. Gemäß dem Schritt 628 wird nun überprüft, ob die erforderliche Anpreßzeit für das Anschweißteil am Grundkörper abgelaufen ist. Ist dies nicht der Fall, so wird unter Aufrechterhaltung der entsprechend eingeregelten Anpreßkraft abgewartet, bis das Zeitintervall abgelaufen ist. Erst wenn die erforderliche Anpreßzeit abgelaufen ist, wird gemäß dem Schritt 629 der Greifer geöffnet, so daß das Anpreßteil nunmehr allein am Grundkörper gehalten ist und dann der Schweißkopf zurück in die Umschaltlage fahren. Zum Durchführen des nächsten Schweißvorganges muß nun wieder zum Schritt 601 gesprungen werden.

## Patentansprüche

1. Schweißkopf für das Heizelementschweißen, insbesondere von thermoplastischen Kunststoffen,
- mit wenigstens einem Schweißspiegel (21, 22) zum Erwärmen der Schweißstelle an Grundkörper (11) und Anschweißteil (12),
- mit einem Greifer (24) zum Aufnehmen des am Grundkörper (11) anzuschweißenden Anschweißteiles (12) und
- mit Antriebsmitteln (23) zum Verfahren des wenigstens einen Schweißspiegels,
- wobei ein erster Schweißspiegel (21) zum Erwärmen der Schweißstelle (13) am Grundkörper (11), ein zweiter Schweißspiegel (22) zum Erwärmen der Schweißstelle am Anschweißteil (12) vorgesehen ist,
**dadurch gekennzeichnet, daß**
- der erste Schweißspiegel (21) und der Greifer (24) auf einem gemeinsamen Tragelement (25) am Schweißkopf (20) angeordnet sind, welches durch Antriebsmittel (23) derart verschwenkbar ist, daß wechselweise der erste Schweißspiegel (21) oder der Greifer (24) mit dem ergriffenen Anschweißteil (12) auf die Schweißstelle (13) am Grundkörpe (11) hin ausgerichtet sind.

2. Schweißkopf nach Anspruch 1, **dadurch gekennzeichnet, daß** der erste Schweißspiegel (21) und der Greifer (24) auf gegenüberliegenden Seiten des Tragelementes (25) angeordnet sind und an diesem um eine rechtwinklig zur Verbindungslinie zwischen Greifer (24) und erstem Schweißspiegel (21) verlaufende Schwenkachse (26) um 180° verschwenkbar ist.

3. Schweißkopf nach einem der Ansprüche 1 oder 2, **dadurch gekennzeichnet, daß** dann, wenn der erste Schweißspiegel (21) auf den Grundkörper (11) hin ausgerichtet ist, der zweite Schweißspiegel (22) mit dem im Greifer gehaltenen Anschweißteil (12) in Anlage bringbar ist.

4. Schweißkopf nach einem der Ansprüche 1 bis 3, **dadurch gekennzeichnet, daß** der zweite Schweißspiegel (22) über einen Linearsteller (27) verfahrbar ist.

5. Schweißkopf nach Anspruch 3 oder 4, **dadurch gekennzeichnet, daß** der zweite Schweißspiegel (22) gegenüber dem Tragelement (25) linear verfahrbar ist.

6. Schweißkopf nach einem der Ansprüche 1 bis 5, **dadurch gekennzeichnet, daß** das Tragelement (25) und der zweite Schweiβspiegel (22) auf einer gemeinsamen Grundplatte (28) angeordnet sind.

7. Schweißkopf nach Anspruch 6, **dadurch gekennzeichnet, daß** die Grundplatte (28) auf ihrer dem Tragelement abgewandten Seite Kupplungsstellen zur insbesondere selbsttäti-gen An- und Abkopplung der Grundplatte an einen bzw. von einem Roboterarm aufweist.

8. Schweißkopf nach einem der Ansprüche 1 bis 7, **dadurch gekennzeichnet, daß** der Greifer (24) für das Anschweiβteil (12) insbesondere selbsttätig auswechselbar ist.

9. Schweißkopf nach einem der Ansprüche 1 bis 8, **dadurch gekennzeichnet, daß** Antriebsmittel (23) und/oder Linearsteller (27) elektrisch angetrieben sind.

10. Schweißkopf nach einem der Ansprüche 1 bis 9, **dadurch gekennzeichnet, daß** Antriebsmittel (23) und/oder Linearsteller (27) fluidisch, insbesondere pneumatisch, angetrieben sind.

11. Schweißkopf nach einem der Ansprüche 1 bis 10, **dadurch gekennzeichnet, daß** der Schweißkopf (20) der Endeffektor (16) eines Industrieroboters (15) ist.

## Claims

1. Welding head for heated tool welding, particularly of thermoplastic materials,
- with at least one welding mirror (21, 22) for heating the welding point on the body (11) and welding part (12),
- with a gripper (24) for receiving the welding part (12) to be welded to the body (11) and
- with drive means (23) for moving the at least one welding mirror,
- a first welding mirror (21) being provided for heating the welding point (13) on the body and a second welding mirror (22) for heating the welding point on the welding, part (12),
**characterized in that**
- the first welding mirror (21) and gripper (24) are arranged on a common supporting member (25) on welding head (20), which is pivotable by drive means (23) in such a way that alternately the first welding mirror (21) or the gripper (24) with the welding part (12) are oriented towards the welding point (13) on the body.

2. Welding head according to claim 1, **characterized in that** the first welding mirror (21) and the gripper (24) are arranged on opposite sides of the supporting member (25) and can be pivoted thereon by 180° about a pivoting axis (26) at right angles to the connecting line between gripper (24) and first welding mirror (21).

3. Welding head according to one of the claims 1 or 2, **characterized in that**, if the first welding mirror (21) is oriented towards the body (11), the second welding mirror (22) can be engaged with the welding part (12) held in the gripper.

4. Welding head according to one of the claims 1 to 3, **characterized in that** the second welding mirror (22) can be displaced by means of a linear controlling element (27).

5. Welding head according to claim 3 or 4, **characterized in that** the second welding mirror (22) is linearly displaceable with respect to the supporting member (25).

6. Welding head according to one of the claims 1 to 5, **characterized in that** the supporting member (25) and second welding mirror (22) are placed on a common base plate (28).

7. Welding head according to claim 6, **characterized in that** the base plate (28) has on its side remote from the supporting member coupling points for in particular the automatic coupling and uncoupling of the base plate with respect to a robot arm.

8. Welding head according to one of the claims 1 to 7, **characterized in that** the gripper (24) for the welding part (12) is in particular automatically changeable.

9. Welding head according to one of the claims 1 to 8, **characterized in that** drive means (23) and/or linear controlling element (27) are electrically driven.

10. Welding head according to one of the claims 1 to 9, **characterized in that** drive means (23) and/or linear controlling element (27) are driven fluidically, particularly pneumatically.

11. Welding head according to one of the claims 1 to 10, **characterized in that** the welding head (20) is the final effector (16) of an industrial robot (15) .

## Revendications

1. Tête de soudage pour soudage par plaque chauffante, notamment pour le soudage de matières plastiques,
- avec au moins un élément de soudage (21, 22) pour chauffer le point de soudage sur le corps de base (11) et sur la pièce à souder (12),
- avec une pince (24) pour saisir la pièce (12) à souder sur le corps de base (11) et
- avec des organes d'entraînement (23) pour déplacer au moins un des éléments de soudage,
- un premier élément de soudage (21) étant prévu pour chauffer le point de soudage (13) sur le corps de base (11), un deuxième élément de soudage (22) étant prévu pour chauffer le point de soudage sur la pièce à souder (12),
**caractérisée en ce que**
- le premier élément de soudage (21) et la pince (24) sont disposés sur un seul élément de support (25) sur la tête de soudage (20), lequel peut être pivoté par des organes d'entraînement (23) de manière que tour à tour le premier élément de soudage (21) ou bien la pince (24) saisissant la pièce (12) à souder soient orientés vers le point de soudage (13) sur le corps de base (11).

2. Tête de soudage d'après la revendication 1, **caractérisée en ce que** le premier élément de soudage (21) et la pince (24) sont disposés des deux côtés opposés de l'élément de support (25) et qu'ils sont pivotables de 180° auprès de celui-ci autour d'un axe de pivotement (26) qui s'étend orthogonalement par rapport à la ligne de jonction entre la pince (24) et le premier élément de soudage (21).

3. Tête de soudage d'après une des revendications 1 ou 2, **caractérisée en ce que** quand le premier élément de soudage (21) est orienté vers le corps de base (11) le deuxième élément de soudage (22) peut être disposé de manière contiguë à l'élément à souder (12) qui est saisi par la pince.

4. Tête de soudage d'après une des revendications de 1 à 3, **caractérisée en ce que** le deuxième élément de soudage (22) est déplaçable au moyen d'un organe correcteur linéaire (27).

5. Tête de soudage d'après la revendication 3 ou 4, **caractérisée en ce que** le deuxième élément de soudage (22) peut être déplacé de manière linéaire par rapport à l'élément de support (25).

6. Tête de soudage d'après une des revendications de 1 à 5, **caractérisée en ce que** l'élément de support (25) et le deuxième élément de soudage (22) sont disposés sur une même plaque de base (28).

7. Tête de soudage d'après la revendication 6, **caractérisée en ce que** la plaque de base (28) présente à sa face opposée à l'élément de support des points de couplage pour coupler et désaccoupler de manière notamment automatique la plaque de base à un ou encore d'un bras de robot.

8. Tête de soudage d'après une des revendications de 1 à 7, **caractérisée en ce que** la pince (24) pour la pièce à souder (12) est interchangeable de manière notamment automatique.

9. Tête de soudage d'après une des revendications de 1 à 8, **caractérisée en ce que** des organes d'entraînement (23) et/ou des organes correcteurs linéaires (27) sont actionnés électriquement.

10. Tête de soudage d'après une des revendications de 1 à 9, **caractérisée en ce que** des organes d'entraînement (23) et/ou des organes correcteurs linéaires (27) sont actionnés de manière fluidique, notamment pneumatique.

11. Tête de soudage d'après une des revendications de 1 à 10, **caractérisée en ce que** la tête de soudage (20) est l'effecteur terminal (16) d'un robot industriel (15).
